# EUROPEAN PATENT SPECIFICATION

(11) **EP 1 121 311 B1**
(45) Date of publication and mention of the grant of the patent: **23.04.2003**
(21) Application number: 99946350.8
(22) Date of filing: 15.09.1999
(51) Int. Cl.: B65G 1/00

(54) **PLATE STACKING**
STAPELN VON PLATTEN
EMPILEMENT DE PLAQUES

(30) Priority: 19.09.1998 GB 9820376
(43) Date of publication of application: 08.08.2001
(73) Proprietor: Heights Design Production Ltd., Halifax, West Yorkshire HX2 7TJ (GB)
(72) Inventor: ATKINSON, Mark, Halifax, West Yorkshire HX2 7TJ (GB)
(74) Representative: Sherrard-Smith, Hugh
(86) International application number: GB9903067
(87) International publication number: WO00017071

(56) References cited:
- US-A- 3 774 783

## Description

The present invention relates to plate stacking arrangements and a method of operating plate stacking arrangements. The invention is particularly, although not exclusively, applicable to stacking lithographic plates.

In existing litho plate control devices plates are moved by a conveyor onto a plate support and driving assembly with the plates being tilted and carried downwardly by that assembly towards a trolley. The plates are supported on bands that carry them downwardly. When the plates reach the bottom end of their travel a lifting arm assembly is pivoted to lift the plates off the driving assembly and to tilt the plates over centre onto the trolley to stack the plates on the trolley.

A disadvantage with such a control device is that the belts of the driving assembly are driven at a constant speed. That speed must be sufficiently slow such that the plates do not shoot towards the trolley with there being a risk of the plate continuing to slide under their momentum when the belts stop. Such sliding would cause the plates to smash into the trolley or a previously stacked plate. Consequently, because of the slow rate of driving the plates, there must be a significant gap between plates on the conveyor that approach the device as otherwise a following plate would reach the device before the lifting arms had returned to a position in which they would be located beneath an approaching plate. This can lead to the whole of the production line being held up. This problem is particularly acute with relatively small plates as they have to travel a significant distance on the bands before their leading edge reaches the position in which the plates can be stacked.

US 3 774 783 discloses glass sheets travelling along a horizontal conveyor which ride over and drop off a driven roll at the discharge end of the conveyor onto the angled face of a vacuum platen which receives, aligns and retains it.

It is an object of the present invention to attempt to overcome the above described disadvantage.

According to the present invention a plate stacking arrangement is defined by the independent Claims 1 and 10 and the dependent claims.

The driving region may be arranged to convey a plate in a second direction, opposed to the first direction, after the plate has been driven in the first direction with that driving in the second direction being to a lesser extent than a plate is driven in the first direction. The extent that a plate is driven in the second direction may be less than 50 mm or in the region of 25 mm.

A common drive may be included for the conveying of the plate in the driving region and also for moving a plate such that the first surface moves from facing downwardly to face at least partially upwardly. The common drive may comprise a single motor. The common drive may include a gear box or alternatively or additionally, a torque limited and, alternatively or additionally, a common drive shaft and, alternatively or additionally, a free wheel clutch. The means to cause a plate to be moved such that the first surface of a plate moves from facing downwardly to face at least partially upwardly may comprise pivotally mounted arms that are located beneath the plate during at least part of the duration that a plate is being driven in the first direction, the arms being pivotally movable to raise a plate from the driving region to cause the plate to be tipped about its leading edge with respect to the first direction.

The drive region may include at least one drive assembly comprising a band arranged to at least partially support a plate, a guide for the band during at least part of the extent that the article is conveyed along and supported by the band and a rotatable member at each end of the drive assembly around which the band passes, the guide and the rotatable members being detachable from each other. The rotatable members may be arranged to be rotatably supported by a bearing member. The rotatable members and the bearing members may be arranged to be a snap fit. The bearing members may include supports for each axial side of the rotatable member.

The arrangement may include a strut extending between the rotatable members. The strut may be detachable from the rotatable members. The strut and the bearing members may include cooperating portions that are arranged to align those parts in the longitudinal extent of the strut whereby the axial extent of the rotatable members with respect to the longitudinal axis of the strut are aligned.

The arrangement may include a plurality of drive assemblies spaced from each other. The arrangement may include means for retaining the drive assemblies in their relative spaced positions and they may be so retained by being detachably retained. The arrangement may include a common drive shaft for each drive assembly. Each drive assembly may be detachably mounted on that common drive shaft.

Any of the guide or the rotatable members or the bearing members or the strut may be made of plastics and/or may be machined by computer numerical control.

The first direction that a plate is arranged to be driven in may be inclined downwardly.

The plate may be driven in the first direction until the leading edge of the plate hits an abutment with the plate continuing to be urged in the first direction after abutment. That abutment may be with a support surface against which the plate is arranged to be stacked or against a previously stacked plate.

Movement of the plate in the first direction may be provided by the same power source that moves the plate to cause its first face to face at least partially upwardly in the stacked position. The common power source may comprise a driven shaft rotatable in one direction to convey the plate in the first direction with rotation of that shaft in the reverse direction causing the plate to be moved from the stacked position. Reversal of the direction of the drive shaft may also cause the movement of the plate in the second direction.

The present invention can be carried into practice in various ways but one embodiment will now be described, by way of example, and with reference to the accompanying drawings in which:-
Figure 1 is a perspective view of plate stacker including a plate control device 10 and a trolley 12;
Figure 2 is a view similar to Figure 1 with the main assemblies of the plate control device 10 in an exploded position;
Figure 3 is a side view of Figure 1;
Figure 4 is a rear perspective view of a lifting arm assembly 14 with the parts being in an exploded position;
Figure 5 is a perspective view of a plate support and driving assembly 16 showing how the parts are connected and spaced from each other in an axial direction;
Figure 6 is an exploded view showing how one of the elastic belts 18 is supported, guided and driven;
Figure 7 is an exploded view of a housing 20 of the plate control device to which the lifting arm assembly 14 and the plate support and driving assembly 16 are connected;
Figure 8 is an exploded view of the motor drive assembly 22 used to power the lifting arm assembly and the belts 18, and
Figures 9 and 10 are respectively exploded and connected perspective views of a connecting arm 24 used to transmit motion to the lifting arm assembly 14.

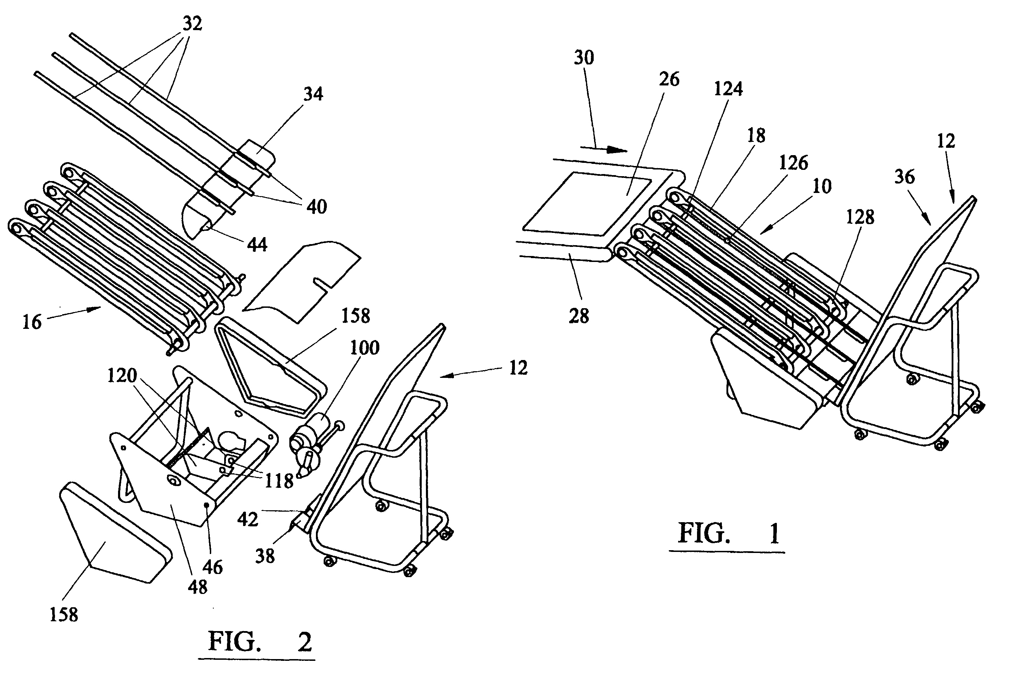

Referring first to Figure 1, lithographic plates 26 are advanced along a conveyor belt 28 towards the control device 10 in the direction of arrow 30. It will be appreciated that as the plates go over centre from the conveyor belt 28 they will tilt downwardly to take up the angle of inclination of the plate support and driving assembly 16.

The plates are prevented from sliding down the driving assembly 16 by frictional engagement of the plates with the elastic belts 18. Those belts 18 are driven such that they convey the plates downwardly towards the trolley 12.

When the plates are at the bottom of their travel on the assembly 16 the lifting arm assembly 14 is actuated. This assembly 14 includes three arms 32 that, prior to their actuation, have been located parallel to the belts 18 but below the belts 18 so that they do not interfere with the plates. Upon actuation though a bracket 34 to which the arms 32 are connected is caused to pivot thereby bringing the arms up from beneath the belts 18 to engage the underside of the plates 26 and to pivot the plates towards the trolley. Once the plates go over their centre they fall gently to change their orientation such that the face that previously faced upwardly now faces downwardly towards the supporting face 36 of the trolley.

It can be seen that the first plate received by the trolley abuts the supporting face 36 of the trolley with successive plates then abutting the exposed face of an immediately precedingly stacked plate. The base of each plate is supported by an inclined edge 38 of the trolley.

During lifting of the plate, the arms 32 provide support for the plate along the complete length of the plate. To this end, the lower end of the arms include projections 40 that extend downwardly beyond the bracket 34 of the lifting arm assembly. Those projections 40 move through aligned slots 42 in the trolley when the plate is being lifted.

After each plate has been stacked the lifting arm assembly is returned back to the position in which the arms 32 are located beneath the belts 18.

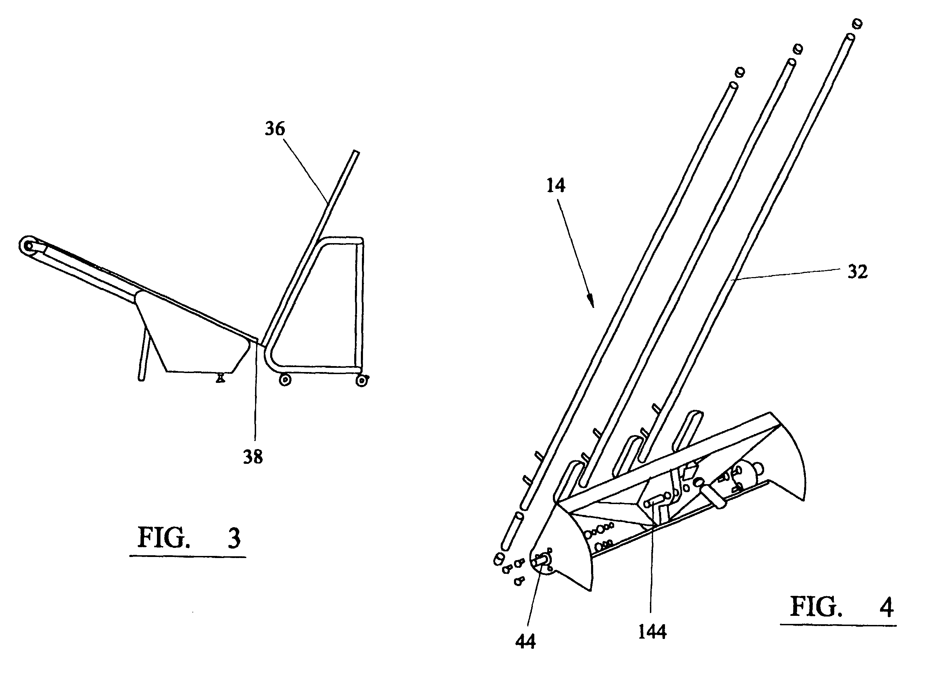

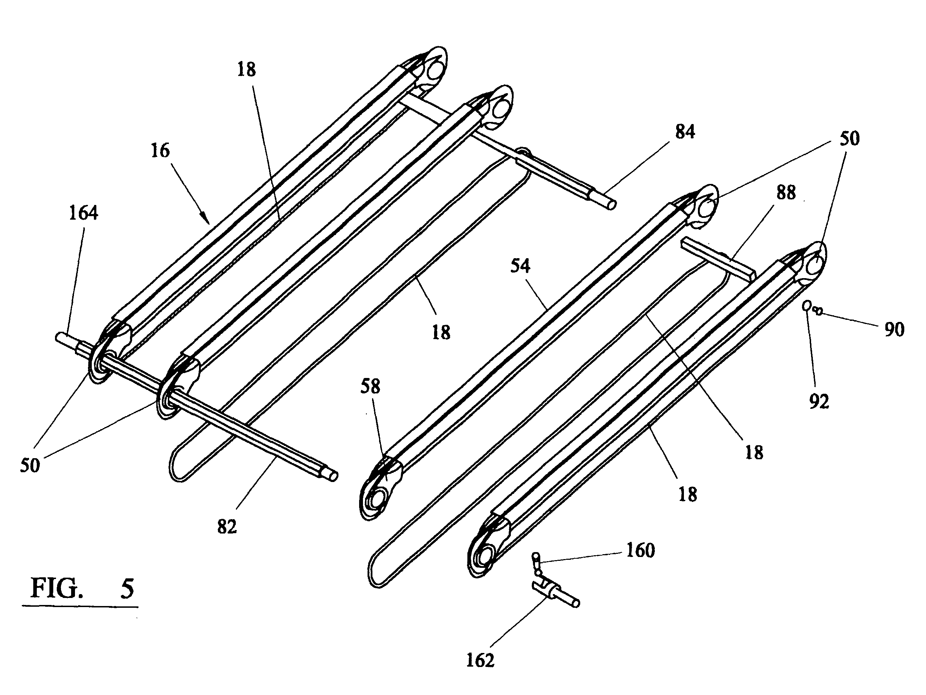

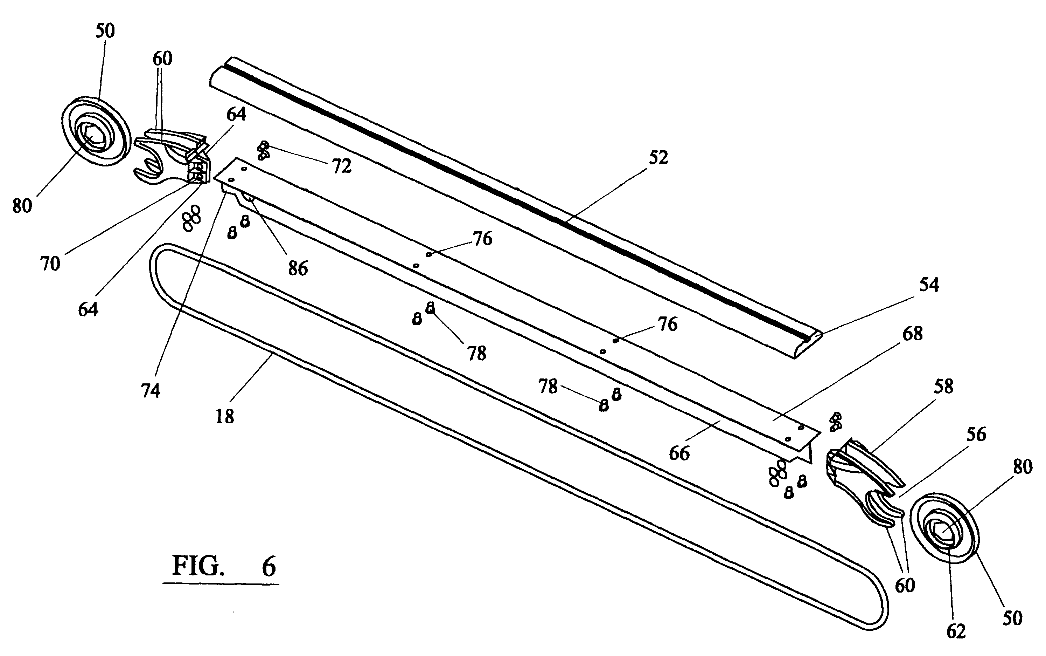

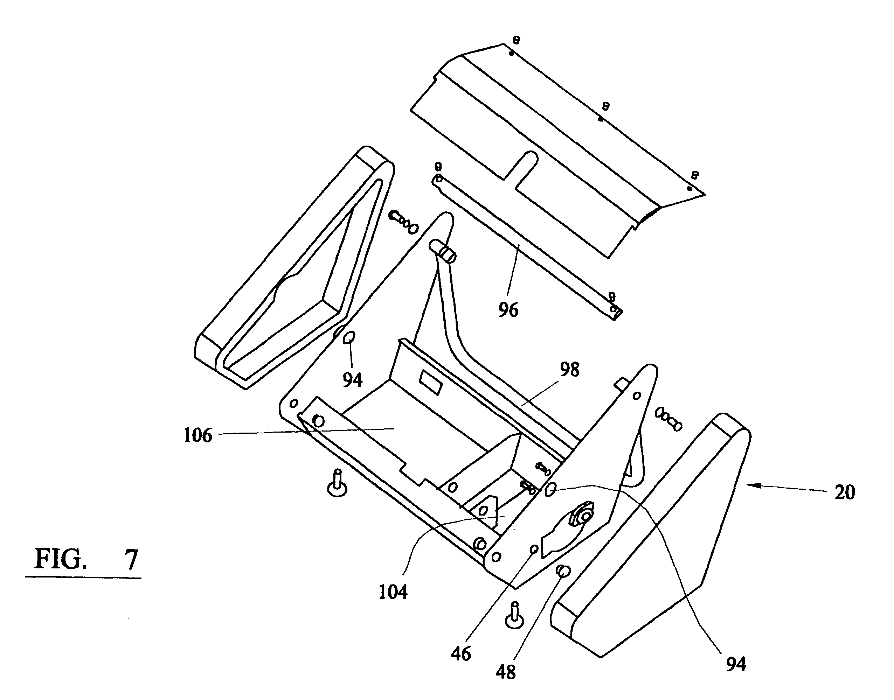

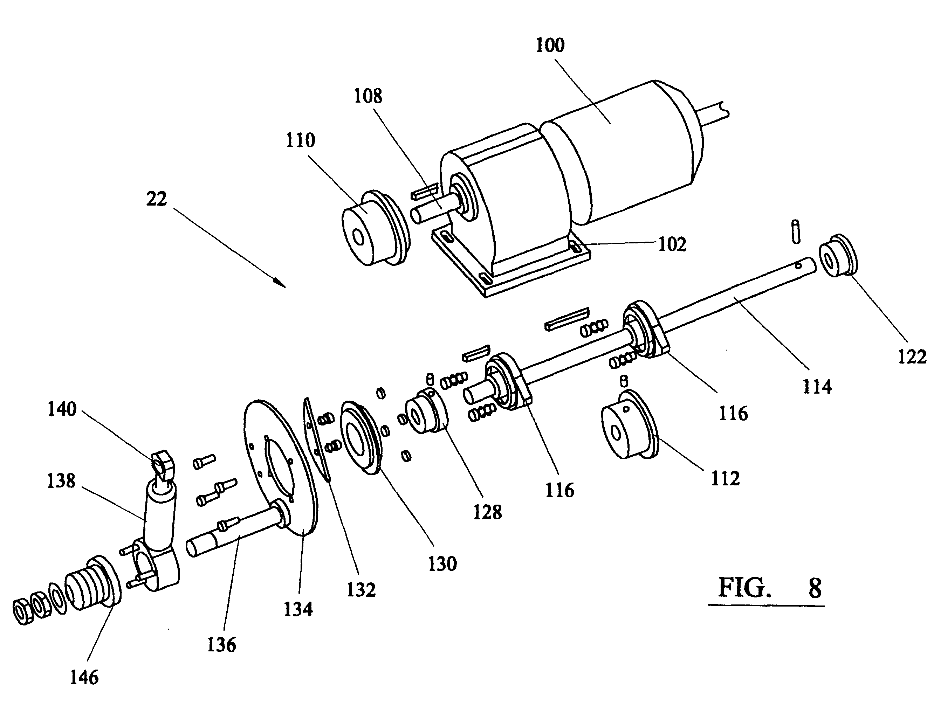

As shown in Figures 2, 4 and 7, the bracket 34 of the lifting arm assembly includes projecting spigots 44 that, in use, extend into openings 46 in side plates 48 of the housing 20 to provide the pivotal mounting for the lifting arm assembly 14.

The parts of the plate support and driving assembly 16 will now be described with particular reference to Figures 5 and 6. The assembly 16 includes four belts 18 that are constrained to travel around pulleys 50 at the upper and lower extent of the belts. On the upper run of the belts between the pulleys 50 the belt extends partially within a groove 52 in a guide member 54 with the belts also having a slight projection above the grooves 52. The lower extent of the belts between the pulleys 50 is unsupported.

The pulleys 50 are retained in position by being a snap-fit in a socket 56 of a clamp 58. Each socket 56 includes a pair of spaced arms 60 that engage with cylindrical projections 62 on each axial side of the pulleys 50. The clamps 58 also include a pair of spaced flanges 64 between which is received a downwardly extending elongate plate 66 of an elongate beam 68. The flanges 64 include a pair of spaced openings 70 through which bolts 72 can be passed to extend through correspondingly aligned openings 74 in the plate 66 to secure the clamps 58 onto the beam 68. The upper surface of the beam 68 includes four pairs of openings 76 through which bolts 78 can pass in order to threadably engage and firmly attach the guide member 54 to the beam 68.

The centre of each pulley 50 includes a hexagonal opening 80. A hexagonal shaft 82 passes through those openings 80 at the lower end of the assembly such that rotation of the shaft 82 causes rotation of the lower pulleys and therefore movement of the belts. The upper pulleys are free running in the sockets 56 of the clamps 58.

At the upper end of the assembly a tie rod 84 extends through aligned openings 86 in the plate 66 of the beam 68. Tie spacers 88 extend around the tie rod 84 between the beams 68 to prevent movement of the beams towards each other. Bolts 90 including washers 92 are threadably engaged with the axial ends of the tie rod 84 to prevent the beams 68 moving away from each other in the axial extent of the tie rod 84.

It can be seen that the pulleys 50 and the clamps 58 at the upper and lower extent are identical in their construction and therefore interchangeable.

The lower shaft 82 is pivotally supported at either end in sockets 94 formed in or mounted on each side plate 48.

The lifting arm assembly 14 and the plate support and driving assembly 16 are prevented from moving downwardly from their angle of inclination shown in Figure 1 by abutment of the arms 32 and the underneath of the plate 66 of the beam 68 with a cross member 96 that extends between the side plates 48. The cross member 96 is connected to the upper end of a pivotally mounted leg 98 that is connected pivotally to each side plate 48. The leg 98 supports the plate control device at one end thereof whereby pivotal movement of the leg 98 can cause that end to be raised or lowered to thereby alter the height at which the top end of the belts can receive the plates.

The housing 20 also locates a motor and gear box 100 shown in Figure 8. The base of the motor and gear box 100 includes openings 1 and 2 through which bolts can be passed in openings 104 to secure the motor and gear box 100 to a base plate 106 that extends between the side plates 48 at the bottom thereof. The output shaft 108 from the gear box is connected to a torque limiter 110. The torque limiter 110 drives a sprocket 112 via a chain (not shown). The sprocket 112 is constrained to rotate with a drive shaft 114. The drive shaft 114 is rotatably mounted in bearings 116 that are located in openings 118 formed on vertically extending brackets 120 that are fixed to the base plate 110.

One end of the drive shaft projects through the side plate 48 and has a drive sprocket 112 secured thereto. A chain (not shown) connects that drive sprocket 122 with a drive sprocket (not shown) fast with the hexagonal shaft 82 that drives the pulleys 50. Consequently, rotation of the output shaft 108, in one direction, causes rotation of the pulleys 50 in one direction. Rotation of the output shaft 108 from the motor in the opposite direction causes rotation of the pulleys 50 in the opposite direction.

The sequence of loading a lithographic plate will now be described.

The plate 26 is advanced until it projects slightly beyond the end of the conveyor 28. A sensor 124 determines that the plate is arriving. At that time the motor is started in order to drive the elastic belts in the grooves 52 downwardly. The plate will gradually tilt off the edge of the conveyor 28 until it rests solely on the moving belts 18 whereupon it is driven down with the belts. As the forward edge of the plate advances downwardly, and once the plate is securely on the belts 18, the forward edge is detected by a second sensor 126 whereupon a signal from that sensor 126 causes the speed of the motor to increase to accelerate the plate down with the bands 18. When a sensor towards the bottom of the bands 18 picks up the presence of the leading edge of the plate the motor is slowed down to gradually inch the front edge of the plate towards the supporting face of the trolley. The leading edge then either engages the supporting face of the trolley or the rear of a precedingly stacked plate. If there is any misalignment of the front edge relative to the surface that it engages then this is taken up by the belts continuing to drive the plate momentarily in order to skew the plate back into the correct alignment before the motor is first stopped and then reversed.

What happens on the reversal of the motor will be described shortly. However, the significance of the plate being driven at a rapid speed once it is safely engaged on the belts and before it is in close proximity with the trolley is that the plates are moved quickly to the required position before the arms tilt the plates up to stack them on the trolley and then return back into a position in which the belts could then receive the next plate. It will be appreciated that plates are continually advancing along the conveyor 28 and the plate control device cannot receive a subsequent plate until one plate has been completely stacked and the lifting arm assembly has been returned. This feature is of particular importance where the plates are relatively short in length and it allows a much shorter spacing between plates on the conveyor belt 28 to occur than would otherwise be the case if the plates were driven at a constant speed (which would necessarily be a relatively slow speed) on the belts 18.

After the motor has been stopped the motor is then reversed such that the shaft 114 undergoes a complete revolution in the opposite direction from that which it was previously driven in.

An adaptor 128 is fixed onto the end of the shaft 114 opposite to the drive sprocket 122. A frictional clutch 130 including a trip dog 132 are mounted on the adaptor 128 such that drive from the shaft 114 is only transferred to a tilt crank 134 during this one revolution of reverse rotation. The tilt crank 134 then rotates one revolution.

An eccentric shaft 136, parallel to the axis of the drive shaft 114, but offset therefrom, extends from one side of the tilt crank 134 and has mounted thereon an elastic link assembly 138. The link assembly 138 includes an opening 140 which is rotatably connected by a pivot pin 144 to the underside of the lifting arm assembly. The axis of the pivot pin 144 is offset from the axis defined by the spigots 44 of the lifting bar assembly. Accordingly rotation of the eccentric shaft 136 causes the lifting bars to be moved upwardly, over centre to transfer the lithographic plate onto the trolley and then back again to the position shown. The device detects when that one revolution has occurred and when the bars are back in place and the motor is then stopped with the device being ready to receive a further plate.

When the trolley has the required number of stacked plates thereon, the trolley is simply wheeled away and a new empty trolley takes its place.

It can be seen that the bands 18 are driven in the reverse direction whilst the lifting bars are operating. Thus the plate is moved slightly back up the bands before the bars 32 take the photo of the bands as the plate is being transferred. That movement of the plates is approximately 25 mm. This avoids the leading edge of the plate from scraping against the supporting face 36 of the trolley or the surface of a previously stacked plate upon tilting which might flake or crack the edges thereof. The edge 38 of the trolley is covered with a cushioning layer (not shown) to bring the leading edge of the plates gently into engagement with the base of the trolley.

The flexible link is rotatably mounted on the eccentric shaft 136, but it is not free to rotate on that shaft. To this end, a slipping clutch 146 connects the elastic link assembly to the shaft 136 such that the pivotal movement on the shaft 136 is smooth and the plates are not jerked up.

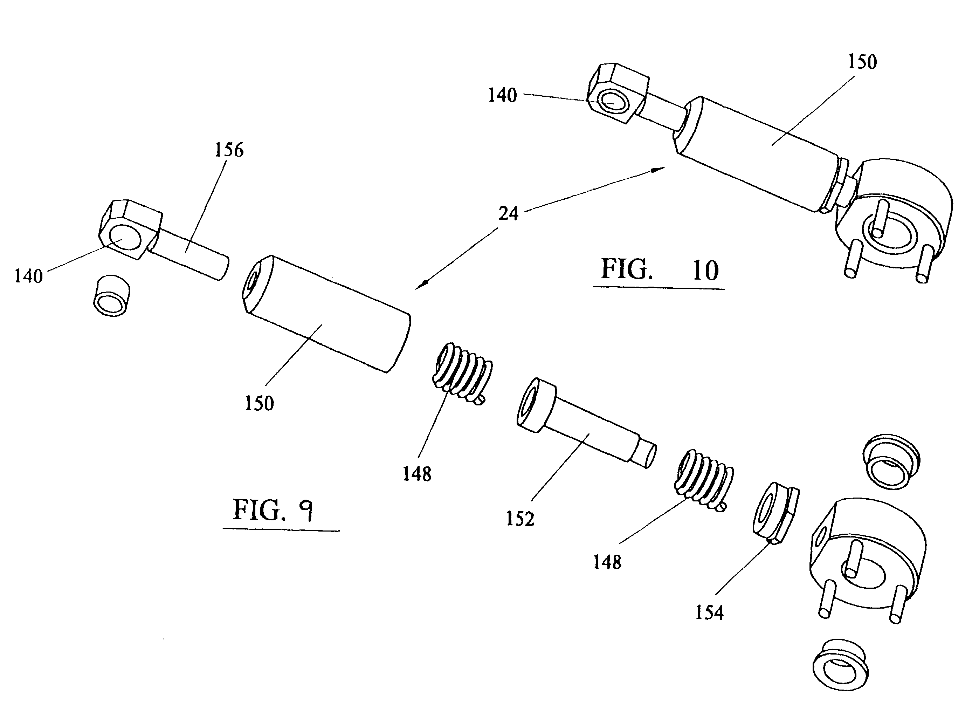

The elastic link assembly is shown in more detail in Figures 9 and 10. It comprises two spaced compression springs 148 which are trapped within a cylinder 150 with one of the springs being on one side of a piston 152 and the other end extending around a shaft of that piston.

A cylinder nut 154 constrains the springs and the piston to be within the cylinder 150 and a bar link 156 extends into the other end of the cylinder 150. Accordingly the elastic link assembly is able to be extended or contracted to ensure that the device can fit the pivot pin 144 and also be aligned with the eccentric shaft 136. Furthermore, any variations between the pivot pin and the eccentric shaft during movement, such as may occur due to manufacturing intolerances, can be taken up by elastic adjustment of the link assembly.

The side plates 48 are enclosed by side covers 158 to keep the chain drive for the plate support and driving assembly 16, which is on the outside of one of the side plates, covered and also for aesthetic reasons.

Should it become necessary to replace one of the elastic belts 18, for instance due to breaking of that belt, then the belt could be repaired in the traditional way of threading an open ended piece of elastic around the hexagonal shaft 82 and the tie rod 84, and then welding the free ends of that band together. Alternatively, when viewing Figure 5, the end of the shaft 82 that defines the pivot of that shaft can be detached by removing the bolt 160 to allow the shaft 82 to be lifted upwardly, away from the pivot 162 of that shaft and to allow the pivot 164 at the other end to be pulled through its pivot mounting. The whole of the plate support and driving assembly can then be removed from the device to allow an already joined belt to be stretched and moved along the assembly before the belt is relaxed to cooperate with the relevant pulleys. Similarly, assuming any of the pulleys or clamps or any other parts require replacement, this can be effected simply by sliding the parts on and off the hexagonal rod and the tie rod and reassembling the parts with functional components.

The support and driving assembly 16 can be replaced by one of a longer or shorter length, if desired, simply by detaching the parts and replacing the beams 68 with other beams of different lengths. Similarly, the arms 32 of the lifting arm assembly 14 can be replaced by removing bolts that secure those arms to the bracket 34 and attaching other arms of a different length.

The components that the plate support in the driving assembly, including the hexagonal shaft, the tie-rod and the other parts may be made of plastics and may be made by a CNC machine. This allows the device to be extremely lightweight and with extremely high precision.

## Claims

1. A plate stacking arrangement including a driving region (16) arranged to support a first surface of a plate (26) to be stacked and to convey that plate in a first direction and means (32) to cause a plate (26) to be moved such that the first surface of a plate moves from facing downwardly to face at least partially upwardly in a stacked position, the arrangement being **characterised in that** the first direction is a downwards direction and **in that** means (100,126) are provided to vary the rate at which a plate is conveyed along the driving region as the plate is conveyed along the driving region.

2. An arrangement as claimed in claim 1 at which the rate that a plate is arranged to be driven towards the end of the driving region in the first direction is less than the rate that a plate is arranged to be driven prior to that end.

3. An arrangement as claimed in claim 1 or 2 in which the rate that a plate is arranged to be driven at is slower at the start of the driving region than a subsequent rate that the plate is arranged to be driven at.

4. An arrangement as claimed in any preceding claim at which the rate that a plate is arranged to be driven is slower at the end of the driving region than it is at the start of the driving region.

5. An arrangement as claimed in any preceding claim in which a plate is arranged to continue to be driven in the first direction after abutment of a leading edge of the plate.

6. An arrangement as claimed in any preceding claim in which the driving region is arranged (100) to convey a plate in a second direction, opposed to the first direction, after the plate has been driven in the first direction with that driving in the second direction being to a less extent than a plate that is driven in the first direction.

7. An arrangement as claimed in any preceding claim in which a common drive (100) is included for the conveying of the plate in the driving region and also for moving a plate such that the first surface moves from facing downwardly to face at least partially upwardly.

8. An arrangement as claimed in any preceding claim in which the driving region includes at least one band (18) on which a plate is arranged to be at least partially supported when the plate is being conveyed, the band (18) being driven by a shaft (14), the shaft being at least partially detachable from a shaft mounting (160,164) whereby said band (18) can be replaced by causing a further band to be passed around said shaft.

9. An arrangement as claimed in any preceding claim in which the drive region includes at least one drive assembly comprising a band (18) arranged to at least partially support a plate (26), a guide (52,54) for the band during at least part of the extent that the article is conveyed along and supported by the band and a rotatable member (50) at each end of the drive assembly around which the band passes, the guide (52,54) and the rotatable members (50) being detachable from each other.

10. A method of operating a plate stacking arrangement comprising conveying a plate (26) in a first direction with the plate being supported by a first surface thereof that faces downwardly and then moving the plate (26) such that the first surface faces at least partially upwardly in a stacked position, the method being **characterised in that** the rate at which the plate is driven in the first direction is varied (100,126) as the plate (26) is driven in the first direction, which first direction is a downwards direction.

11. A method as claimed in claim 10 in which the rate that the plate is conveyed towards the end of that movement is less than the rate prior to the end of that movement.

12. A method as claimed in claim 10 or 11 in which the rate that the plate is driven is slower at the start of the movement than subsequently.

13. A method as claimed in any of claims 10 to 12 in which the rate that the plate is driven at the start of the movement is greater than the rate that the plate is driven at towards to the end of the movement.

14. A method as claimed in any of Claims 10 to 13, in which the plate is driven in the first direction until the leading edge hits an abutment with the plate continuing to be urged in the first direction after abutment.

15. A method as claimed in any of Claims 10 to 14 in which after the plate has been driven in the first direction the plate is moved a small amount in a second direction opposed to the first direction prior to the first surface of the plate moving to a position at which it faces at least partially upwardly in the stacked position.

16. A method as claimed in any of Claims 10 to 15 in which the movement of the plate in the first direction is provided by the same power source (100) that moves the plate to cause its first face to face at least partially upwardly in the stacked position.

## Patentansprüche

1. Plattenstapelanordnung mit einem Antriebsbereichs (16), der angeordnet ist, eine erste Fläche einer zu stapelnden Platte (26) zu stützen und diese Platte in einer ersten Richtung zu befördern und mit Einrichtungen (32) um eine Platte (26) so bewegen zu lassen, dass sich die erste Fläche einer Platte von einer nach unten zeigenden Position bewegt, um zumindest teilweise aufwärts in eine gestappelte Position zu zeigen, wobei die Anordnung **dadurch gekennzeichnet ist, dass** die erste Richtung eine Abwärtsrichtung ist und dass Einrichtungen (100, 126) vorgesehen sind, um die Geschwindigkeit, mit der eine Platte entlang des Antriebsbereichs befördert wird, zu variieren, wenn die Platte entlang des Antriebsbereichs befördert wird.

2. Anordnung gemäß Anspruch 1, bei der die Geschwindigkeit mit der eine Platte zu dem Ende des Antriebsbereichs in der ersten Richtung angetrieben wird, geringer als die Geschwindigkeit ist, mit der eine Platte vor diesem Ende angetrieben wird.

3. Anordnung gemäß Anspruch 1 oder 2 bei der die Geschwindigkeit mit der eine Platte am Anfang des Antriebsbereichs angetrieben wird, langsamer als eine darauffolgende Geschwindigkeit ist, mit der die Platte angetrieben wird.

4. Anordnung gemäß einem der vorgenannten Ansprüche, bei der die Geschwindigkeit mit der eine Platte angetrieben wird an dem Ende des Antriebsbereichs langsamer als an dem Anfang des Antriebsbereichs ist.

5. Anordnung gemäß einem der vorgenannten Ansprüche, bei der eine Platte nach dem Anstoßen einer Vorderkante der Platte weiterhin in der ersten Richtung angetrieben werden.

6. Anordnung gemäß einem der vorgenannten Ansprüche, in der der Antriebsbereich so angeordnet ist (100), eine Platte in einer zu der ersten Richtung entgegengesetzten zweiten Richtung zu befördern nachdem die Platte in der ersten Richtung angetrieben wurde, wobei das Antreiben in der zweiten Richtung zu einem geringeren Ausmaß stattfindet, als bei einer Platte, die in der ersten Richtung angetrieben wird.

7. Anordnung gemäß einem der vorgenannten Ansprüche, in der ein gemeinsamer Antrieb (100) sowohl zum Befördern der Platte in dem Antriebsbereich als auch zum Bewegen einer Platte so, dass die erste Fläche sich von abwärtszeigend auf zumindest teilweise aufwärtszeigend bewegt, beinhaltet ist.

8. Anordnung gemäß einem der vorgenannten Ansprüche, in dem der Antriebsbereich zumindest ein Band (18) beinhaltet, auf dem eine Platte angeordnet ist, um beim Befördern der Platte zumindest teilweise gestützt zu werden, wobei das Band (18) durch eine Welle (14) angetrieben wird, wobei die Welle von einer Wellenfassung (160, 164) zumindest teilweise abnehmbar ist, wodurch das Band (18) ersetzt werden kann, indem ein weiteres Band um die Welle herum geführt wird.

9. Anordnung gemäß einem der vorgenannten Ansprüche, bei der der Antriebsbereich zumindest eine Antriebsbaugruppe, die ein Band (18) zum teilweisen Stützen einer Platte (26), eine Führung (52, 54) für das Band zumindest während einem Bereich, in dem der Gegenstand entlang des Bands befördert und dadurch gestützt wird und ein drehbares Element (50) an jedem Ende der Antriebsbaugruppe aufweist, um das das Band geführt ist, wobei die Führung (52, 54) und die drehbaren Elemente (50) voneinander abnehmbar sind.

10. Verfahren zum Betreiben einer Plattenstapelanordnung, das folgendes aufweist: Fördern einer Platte (26) in einer ersten Richtung, wobei die Platte durch ihre abwärts zeigende erste Fläche gestützt ist und dann Bewegen der Platte (26) so, dass die erste Fläche in einer gestapelten Position zumindest teilweise aufwärts zeigt, wobei das Verfahren **dadurch gekennzeichnet ist, dass** die Geschwindigkeit mit der die Platte in der ersten Richtung angetrieben wird, variiert wird (100, 126) wenn die Platte (26) in der ersten Richtung angetrieben wird, wobei die erste Richtung eine Abwärtsrichtung ist.

11. Verfahren gemäß Anspruch 10, bei dem eine Geschwindigkeit mit der die Platte zu dem Ende dieser Bewegung befördert wird, geringer als die Geschwindigkeit vor dem Ende dieser Bewegung ist.

12. Verfahren gemäß Anspruch 10 oder 11, bei dem die Geschwindigkeit mit der die Platte angetrieben wird, zum Beginn der Bewegung langsamer als danach ist.

13. Verfahren gemäß einem der Ansprüche 10 bis 12, bei dem die Geschwindigkeit mit der die Platte zum Anfang der Bewegung angetrieben wird größer ist als die Geschwindigkeit bei der die Platte zum Ende der Bewegung hin bewegt wird.

14. Verfahren gemäß einem der Ansprüche 10 bis 13, bei dem die Platte in der ersten Richtung angetrieben wird bis die Vorderkante anstößt, wobei die Platte nach dem Anstoßen weiterhin in die erste Richtung gedrückt wird.

15. Verfahren gemäß einem der Ansprüche 10 bis 14, bei dem die Platte, nach dem sie in der ersten Richtung angetrieben wurde, um einen geringen Betrag in einer zu der ersten Richtung entgegengesetzten zweiten Richtung bewegt wird, bevor sich die erste Fläche der Platte auf eine Position bewegt, an der sie in der gestapelten Position zumindest teilweise aufwärts zeigt.

16. Verfahren gemäß einem der Ansprüche 10 bis 15, bei dem die Bewegung der Platte in der ersten Richtung durch die selbe Antriebsquelle (100) vorgesehen ist, die die Platte bewegt, um ihre erste Fläche in der gestapelten Position zumindest teilweise aufwärts zeigen zu lassen.

## Revendications

1. Dispositif d'empilement de plaques, comprenant une zone d'entraînement (16) prévue pour supporter une première surface d'une plaque (26) à empiler et pour déplacer cette plaque dans une première direction, et des moyens (32) pour provoquer le déplacement d'une plaque (26) de telle sorte que la première surface d'une plaque passe d'une orientation face vers le bas à une orientation au moins partielle face vers le haut dans une position empilée, le dispositif étant ***caractérisé en ce que*** la première direction est une direction en descente et ***en ce que*** des moyens (100, 126) sont prévus pour modifier la vitesse à laquelle une plaque est déplacée le long de la zone d'entraînement à mesure que la plaque est déplacée le long de la zone d'entraînement.

2. Dispositif selon la revendication 1, dans lequel la vitesse à laquelle il est prévu d'entraîner une plaque vers l'extrémité de la zone d'entraînement dans la première direction est inférieure à la vitesse à laquelle il est prévu d'entraîner une plaque avant cette extrémité.

3. Dispositif selon la revendication 1 ou 2, dans lequel la vitesse à laquelle il est prévu d'entraîner une plaque est inférieure au départ de la zone d'entraînement à une vitesse ultérieure à laquelle il est prévu d'entraîner la plaque.

4. Dispositif selon l'une quelconque des revendications précédentes, dans lequel la vitesse à laquelle il est prévu d'entraîner une plaque est inférieure à l'extrémité de la zone d'entraînement à ce qu'elle est au départ de la zone d'entraînement.

5. Dispositif selon l'une quelconque des revendications précédentes, dans lequel il est prévu de continuer d'entraîner une plaque dans la première direction après mise en butée d'un bord avant de la plaque.

6. Dispositif selon l'une quelconque des revendications précédentes, dans lequel la zone d'entraînement est prévue (100) pour entraîner une plaque dans une seconde direction, opposée à la première direction, après que la plaque ait été entraînée dans la première direction, cet entraînement dans la seconde direction étant d'une moindre longueur qu'une plaque qui est entraînée dans la première direction.

7. Dispositif selon l'une quelconque des revendications précédentes, dans lequel un entraînement commun (100) est présent pour l'entraînement de la plaque dans la zone d'entraînement et aussi pour le déplacement de la plaque de telle sorte que la première surface passe d'une orientation face vers le bas à une orientation au moins partielle face vers le haut.

8. Dispositif selon l'une quelconque des revendications précédentes, dans lequel la zone d'entraînement comprend au moins une bande (18) sur laquelle est disposée une plaque de manière à être au moins partiellement supportée lorsque la plaque est déplacée, la bande (18) étant entraînée par un arbre (14), l'arbre étant au moins partiellement détachable d'un support (160, 164) d'arbre, grâce à quoi ladite bande (18) peut être remplacée en faisant passer une autre bande autour dudit arbre.

9. Dispositif selon l'une quelconque des revendications précédentes, dans lequel la zone d'entraînement comprend au moins un dispositif d'entraînement comprenant une bande (18) prévue pour supporter au moins partiellement une plaque (26), un guide (52, 54) pour la bande sur au moins une partie de la longueur sur laquelle l'article est déplacé et supporté par la bande, et un élément rotatif (50) à chaque extrémité du dispositif d'entraînement autour duquel passe la bande, le guide (52, 54) et les éléments rotatifs (50) étant détachables les uns des autres.

10. Procédé de mise en oeuvre d'un dispositif d'empilement de plaques comprenant le déplacement d'une plaque (26) dans une première direction, la plaque supportée par une première surface de celui-ci étant orientée face vers le bas, puis le déplacement de la plaque (26) de telle sorte que la première surface soit orientée face au moins partiellement vers le haut dans une position empilée, le procédé étant ***caractérisé en ce que*** la vitesse à laquelle la plaque est entraînée dans la première direction est modifiée (100, 126) lorsque la plaque (26) est entraînée dans la première direction, cette première direction étant une direction en descente.

11. Procédé selon la revendication 10, dans lequel la vitesse à laquelle la plaque est déplacée vers la fin de ce déplacement est inférieure à la vitesse avant la fin de ce déplacement.

12. Procédé selon la revendication 10 ou 11, dans lequel la vitesse à laquelle la plaque est entraînée est plus lente au début du déplacement qu'elle n'est ensuite.

13. Procédé selon l'une quelconque des revendications 10 à 12, dans lequel la vitesse à laquelle la plaque est entraînée au début du déplacement est supérieure à la vitesse à laquelle la plaque est entraînée vers la fin du déplacement.

14. Procédé selon l'une quelconque des revendications 10 à 13, dans lequel la plaque est entraînée dans la première direction jusqu'à ce que le bord avant heurte une butée, la plaque continuant d'être forcée dans la première direction après la butée.

15. Procédé selon l'une quelconque des revendications 10 à 14, dans lequel, après que la plaque ait été entraînée dans la première direction, la plaque est légèrement déplacée dans une seconde direction opposée à la première direction avant que la première surface de la plaque ne passe dans une position où elle est orientée au moins partiellement face vers le haut dans la position empilée.

16. Procédé selon l'une quelconque des revendications 10 à 15, dans lequel le déplacement de la plaque dans la première direction est assuré par la même source d'énergie (100) que celle qui déplace la plaque pour que sa première face passe dans une orientation au moins partielle vers le haut dans la position empilée.
